# EUROPÄISCHE PATENTANMELDUNG

(11) **EP 3 305 724 A1**
(43) Veröffentlichungstag der Anmeldung: **11.04.2018**
(21) Anmeldenummer: 17400056.2
(22) Anmeldetag: 04.10.2017
(51) Int. Cl.: C01B 25/01, C02F 11/10, C10G 1/00

(54) **VERFAHREN ZUR GEWINNUNG VON PHOSPHOR**

(30) Priorität: 04.10.2016 DE 102016011790
(71) Anmelder: Hochschule Merseburg, 06217 Merseburg (DE)
(72) Erfinder: Seitz, Mathias, 06618 Naumburg (Saale) (DE); Zimmermann, Jens, 07554 Gera (DE); Stam-Creutz, Timo, 06114 Halle (Saale) (DE)
(74) Vertreter: Fischer, Volker

(57) **Zusammenfassung**

Die Erfindung betrifft ein Verfahren zur Gewinnung von Phosphor durch Phosphatentfrachtung eines phosphorhaltigen organischen Substratmaterials mit integrierter Nutzung von Pyrolysekoks, umfassend die Verfahrensschritte:
a) eine Pyrolyse des Substratmaterials mit oder ohne Katalysator, bei dem das Substratmaterial unter Inert- oder Reaktionsgasbedingungen zu Kohlenwasserstoffen, Brenngas und Koks als Pyrolyseprodukte umgesetzt wird;
b) zumindest teilweise Abtrennung des bei der Pyrolyse anfallenden Kokses mit anschließender Phosphatentfrachtung des Kokses und Phosphatgewinnung;
c) zumindest teilweise Einbindung oder Rückführung des bei der Pyrolyse anfallenden Kokses in eine Aufbereitungsstufe des Substratmaterials vor dessen Pyrolyse, so dass ein Kohlenstoffkreislauf in den Gesamtprozess der Phosphatentfrachtung und Phosphatgewinnung integriert ist.

Mit dem erfindungsgemäßen Verfahren können vor allem biogene Abfälle in sauerstoffarme oder sauerstofffreie Kohlenwasserstoffe und Phosphat umgewandelt werden. Phosphat kann dabei mit üblichen Verfahren entweder aus dem Koks oder dessen Asche gewonnen werden.

## Beschreibung

Verfahren zur Gewinnung von Phosphor durch Phosphatentfrachtung eines phosphorhaltigen organischen Substratmaterials mit integrierter Nutzung von Pyrolysekoks.

Unter der "Rückgewinnung von Phosphor" wird in der Fachsprache und auch im Rahmen der vorliegenden Erfindung überwiegend die Gewinnung von Phosphor in Form von Phosphorverbindungen, insbesondere Phosphaten, verstanden.

In den letzten Jahren wurde auf dem Gebiet der Rückgewinnung von Phosphor intensiv gearbeitet, wobei auch eine Vielzahl von Verfahren entwickelt wurde. Alle diese Verfahren zeigen hinsichtlich der Bewertungskriterien wie Wirtschaftlichkeit, Phosphor-Rückgewinnungsquote, Schwermetall- und Giftstoffentfrachtung, Energieeinsatz, Pflanzenverfügbarkeit und anderer Kriterien Vor- und Nachteile.

Es fällt jedoch auf, dass ein besonderer Fokus der Verfahrensentwicklung auf die Rückgewinnung des Phosphors aus der wässrigen Phase, die Wasser und Klärschlamm umfasst, und der Restphasen, wie Asche und Schmelzen, aus der Klärschlammverbrennung sowie der Klärschlammvergasung gelegt wurde. Verfahren, in denen das Hauptaugenmerk auf die Thermolyse bzw. Pyrolyse liegt, wurden weniger intensiv entwickelt. Lediglich die Verwendung des Rückstandes als Düngemittel wurde in Betracht gezogen, zum Beispiel beim PYREG®-Verfahren.

Stand der Technik ist die Erzeugung von Aschen aus der Verbrennung von Klärschlämmen und Biomasse. Dabei wird der Kohlenstoff der Einsatzstoffe zu CO₂ und Energie umgesetzt. Darüber hinaus können Biomassen vergast werden, wobei auch hier Aschen mit erhöhtem Phosphatgehalt anfallen.

Thermolytische Verfahren bzw. Thermolyseverfahren, soweit man diesen Begriff fassen möchte, beinhalten Verfahren, die im Wesentlichen durch inerte Bedingungen bei Wärmeeintrag, beispielsweise bei der Pyrolyse und Trocknung, Wasserzugabe bei gleichzeitigem Wärmeeintrag, zum Beispiel bei einer Carbonisierung oder allothermen Vergasung, und durch die Zugabe von Sauerstoff, wie bei einer partiellen Oxidation bzw. autothermen Vergasung sowie Totaloxidation bzw. Verbrennung, gekennzeichnet sind. Entsprechend den Möglichkeiten laufen die jeweiligen Verfahren bei unterschiedlichen Bedingungen hinsichtlich Temperatur, Druck und/oder Zusammensetzungen ab. Als Rückstand bleiben bei Vergasungsverfahren sowie der Verbrennung Schlacken, Aschen, bei der Carbonisierung und Pyrolyse Kokse zurück, die bezogen auf den Einsatzstoff die im Einsatzstoff enthaltenen Mineralstoffe in aufkonzentrierter Form enthalten. Diese können durch geeignete Verfahren, zum Beispiel durch Laugung, dem Rückstand entzogen und damit selektiv gewonnen werden.

Bei der Hydrolyse und hydrothermalen Carbonisierung wird der Einsatzstoff im wässrigen Medium auf bis zu 250 °C aufgeheizt. Die organische Substanz wird hydrolysiert bzw. carbonisiert. Dabei werden Gase und flüssige Komponenten freigesetzt. Bei der Carbonisierung fallen zusätzlich große Mengen an Biokohle an, die thermisch verwertet werden kann. Einen besonderen Vorteil der hydrothermalen Carbonisierung ist die relativ einfache und energetisch günstige Trennung von Feststoff und Flüssigkeit. Hinsichtlich üblicher Entwässerungsverfahren schneidet die hydrothermale Carbonisierung von Faulschlamm im Vergleich besser ab.

Ein altes, wichtiges thermisches Verfahren ist die Pyrolyse, die auch Thermolyse oder auch Niedertemperaturkonvertierung genannt wird. Der Einsatzstoff wird aufgeheizt, wobei flüchtige Bestandteile aufgrund von Spaltprozessen und Verdampfen entgasen. Ein Maximum der Entgasung kann zwischen Temperaturen zwischen 550 und 750 °C erreicht werden. Das entstehende Gas kann zu Wärme und Elektroenergie, zum Beispiel in einem Blockheizkraftwerk, umgewandelt werden. Entsprechend dem Einsatzstoff und den Betriebsbedingungen weist das Gas unterschiedliche Heizwerte auf.

Für Klärschlamm werden beispielsweise Heizwerte zwischen 18 MJ/kg Trockensubstanz (TS) für getrockneten Rohschlamm bis 11 MJ/kgTS für getrockneten Faulschlamm erreicht. Um diesen Klärschlamm jedoch zu trocknen, werden hohe Energiemengen benötigt. Für die Konzentration von Klärschlamm mit einem TS-Gehalt von 21,3 % auf einen TS-Gehalt von 92 % werden ca. 6,7 MJ/kgTS benötigt, wie von **R.Krebs, Weiterentwicklung der hydrothermalen Karbonisierung zur CO₂-sparenden und kosteneffizienten Trocknung von Klärschlamm im industriellen Maßstab sowie der Rückgewinnung von Phosphor: Schlussbericht UTF 387.21.11/IDM 2006.2423.222, 2013** berichtet wird. Als Rückstand der Pyrolyse bleibt Pyrolysekoks. Eine Vielzahl von unterschiedlichen Pyrolyseverfahren zu unterschiedlichen Zwecken sind untersucht worden. Als Einsatzstoffe dienten dabei verschiedene Biomassen, wie zum Beispiel Stroh, Holz, Klärschlamm sowie Kohle und Kunststoffe. Hinsichtlich der Klärschlammbehandlung können derzeit zum Beispiel das PYREG®-Verfahren und die Pyrobustor®-Technik genannt werden.

Vergasungsverfahren werden als partielle Oxidation mit unterstöchiometrischer Luft- oder Sauerstoffzugabe oder als Reformierung mit Wasserdampf oder als Kombination aus beidem betrieben. Dabei wird der Einsatzstoff zu Synthesegas (CO, H₂, CO₂) umgesetzt. Letztere Methode, das Reforming, benötigt externe Energie, die durch eine teilweise Verbrennung des Einsatzstoffes oder des Synthesegases bereitgestellt wird. Das Synthesegas kann stofflich, zum Beispiel für eine Methanolsynthese, oder als Brenngas zur Erzeugung von Wärme und Strom verwertet werden. Als Rückstand bleibt eine Asche oder Schlacke. Hinsichtlich der Klärschlammbehandlung können der Pyrobustor® der Firma Eisenmann, bei dem Pyrolyse und Vergasung stattfinden, ein Verfahren der THERMO-SYSTEM Industrie- & Trocknungstechnik GmbH, das eine Reformierung umfasst, ein Verfahren der SÜLZLE KOPF SynGas GmbH & Co. KG, in dem eine Vergasung stattfindet, oder das Mephrec®-Verfahren mit einer Schmelzvergasung genannt werden.

Ebenso wie bei der Thermolyse wurde in den letzten Jahren eine Vielzahl von Verfahren zur Phosphatrückgewinnung, insbesondere aus Klärschlamm, entwickelt.

Die Technologien lassen sich ebenfalls in mehrere Arten einteilen. Häufig wird dabei nach der Phosphorgewinnung im Behandlungsablauf des Klärschlamms unterschieden. Die Phosphorrückgewinnung kann demnach an den folgenden Orten in der Kläranlage stattfinden:
➢ Rückgewinnung im Kläranlagenablauf,
➢ Rückgewinnung aus den Schlammwässern,
➢ Rückgewinnung aus entwässertem Klärschlamm,
➢ Rückgewinnung aus der Klärschlammasche, auch Monoverbrennung bezeichnet.

Eine Gruppe von Verfahren betrifft eine Abtrennung von Phosphor aus der wässrigen Phase. Da eine wirtschaftliche Rückgewinnung des Phosphors durch die Konzentration des Phosphats im Wasser abhängig ist, strebt man eine Konzentrierung des Phosphatgehalts in der wässrigen Phase an. Dies erreicht man dadurch, dass zunächst eine biologische Phosphatelimination in der Kläranlage erfolgt. Der Phosphatanteil wird dann bei der Schlammbehandlung, beim Wechsel von der anaeroben zur aeroben Stufe, wieder gelöst und in die wässrige Phase gebracht. Durch Fällung, Adsorption/Ionentausch und ggf. zusätzlicher Fällung oder Kristallisation mit und ohne Chemikalienzugabe, wie Kristallisationskeimen, Fällungsmitteln oder pH-Wertregulatoren, kann dann das Phosphat als Magnesiumphosphat oder Calciumphosphat, aber auch als Eisenphosphat aus der wässrigen Phase abgetrennt werden. Alternativ besteht die Möglichkeit, elektrolytische Verfahren einzusetzen.

Weitere Verfahren betreffen eine Abtrennung des Phosphats aus der Schlammphase. In der Schlammphase liegt das Phosphat vorwiegend biologisch und/oder chemisch gebunden vor. Neben dem Phosphat verbleiben aber auch die in der Abwasserreinigung entfernten Schwermetalle und organischen Spurenstoffe im Klärschlamm. Damit müssen die Schwermetallentfrachtung und die Entfernung organischer Spurenstoffe sowie pathogener Keime bei hoher Phosphat-Rückgewinnungsquote realisiert werden. Die Phosphatgewinnung wird durch die Rücklösung des biologisch und/oder chemisch gebundenen Phosphors und Abtrennung vom Feststoff erreicht.

Neben der biologischen Rücklösung mit Fällung bzw. Kristallisation, zum Beispiel beim AirPrex®-Verfahren, werden saure nasschemische Verfahren, wie das Seaborne-Verfahren, oxidative und hydrolytische Verfahren, wie der Kemira KREPRO®-Prozess, beide beschrieben in der DE 10 2009 020 745 A1**,** bei Temperaturen von 160 bis 200 °C bzw. superkritischen Bedingungen, die hydrothermale Carbonisierung, zum Beispiel mit der AVA-cleanphos-Technologie, oder eine Kombination dieser Verfahrensansätze eingesetzt.

Darüber hinaus werden analog wie bei der hydrothermalen Carbonisierung thermolytische Verfahren eingesetzt, wobei der Rückstand als Bodenverbesserer ohne Schwermetallentfrachtung angeboten wird, wie zum Beispiel beim PYREG®-Verfahren.

Auch die Rücklösung durch Kohlendioxidzugabe und das Ausfällen durch Kohlendioxidstripping, wie beim sogenannten Budenheim-Verfahren, kann angewendet werden.

Eine Entfernung der Schwermetalle kann durch eine fraktionierte Fällung oder eine Schwermetallkomplexierung erfolgen.

Bei der thermischen Behandlung von Schlämmen kann neben der thermischen Hydrolyse vor allem die Schmelzvergasung, wie zum Beispiel gemäß dem ME-PHREC®-Verfahren und die Eisenbadschmelze, zum Beispiel mit dem sogenannten ATZ-Eisenbadreaktor, angeführt werden, wobei der Heizwert des Klärschlamms direkt genutzt wird.

Darüber hinaus gibt es Verfahren, bei denen eine Abtrennung von Phosphat aus der Asche nach einer thermischen Behandlung erfolgt. Die thermische Behandlung von Klärschlämmen, die bereits phosphatentfrachtet sein können, gewährleistet, dass organische Stoffe vollständig zerstört werden können. Neben den bereits erwähnten thermischen Verfahren zur Behandlung von Klärschlämmen gewährt dies außerdem nur die Verbrennung und Vergasung, das heißt die thermische Nutzung. Dabei fallen je nach Vorgeschichte mehr oder weniger phosphatreiche Aschen oder Schlacken an, die entweder aufbereitet direkt als Düngemittel eingesetzt werden können oder die eine Phosphatentfrachtung erfahren können. Dem Umgang mit der Schwermetallfraktion kommt dabei eine besondere Bedeutung zu. Diese können entweder in der Asche verbleiben und mit in die Düngemittel gelangen, können selektiv entfernt werden oder werden mit dem Phosphat ausgelaugt und fraktioniert abgeschieden.

Eine Möglichkeit der Asche-Nutzung aus der Verbrennung und Vergasung ist die Substitution von Rohphosphat durch Klärschlammasche in der Düngemittelindustrie. Es erfolgt ein Aufschluss mit Säuren, wobei vorher eine Vermischung mit weiteren Phosphaten, zum Beispiel Rohphosphat, erhältlich durch ein Verfahren nach DE 10 2014 005 929 A1**,** stattfindet. Schwermetalle bleiben im Düngemittel und werden durch die Zugabe von externen Phosphaten verdünnt. Neben der MonoVerbrennung werden Systeme angeboten, die Pyrolyse und die Vergasung bzw. Verbrennung miteinander kombinieren.

Auch können nasschemische Verfahren angewandt werden, bei denen das Phosphat gelöst wird. Während bei sauren Aufschlüssen die Schwermetalle mit gelöst werden, eignen sich basische Aufschlüsse, um die Schwermetalle in der Asche zu belassen. Je nach Verfahren werden beim sauren Aufschluss die Schwermetalle entweder nicht, wie beim LEACHPHOS®-Verfahren, oder aber durch Extraktion, Bioleaching der Schwermetalle, Phosphatrücklösung aus dem Fällprodukt, lonentausch oder elektrolytisch abgetrennt. Für den Aufschluss muss vor allem bei hohen Eisen- und Aluminiumgehalten ein hoher Verbrauch an Chemikalien beachtet werden. Die Rückstände der Aschen bzw. des Abwassers müssen entsorgt werden.

Bei thermochemischen Verfahren soll die Schwermetallentfrachtung durch den Zusatz von Chloriden erreicht werden, zum Beispiel im Ash Dec®-Verfahren, beschrieben unter anderem in der DE 10 2009 020 745 A1**,** wodurch die Verdampfungstemperatur der Schwermetalle verringert wird. Werden thermoelektrische Verfahren eingesetzt, so kann über die Gasphase reiner Phosphor gewonnen werden, wie zum Beispiel beim thermoelektrischen Thermphos®-Verfahren.

Der Nachteil bisher bekannter Verfahren zur Phosphorgewinnung, die eine thermische Verwertung des eingesetzten organischen Substratmaterials einschließen, besteht darin, dass die thermische Verwertung im Wesentlichen durch die sogenannte Monoverbrennung erfolgt, nach der nur die verbleibende Asche zur Phosphatgewinnung stofflich genutzt werden kann. Die Löslichkeit des Phosphats hat bei einer solchen Monoverbrennung allerdings stark abgenommen, so dass ein intensiver Chemikalienverbrauch notwendig ist, um das Phosphat wiederzugewinnen.

Die der Erfindung zugrunde liegende Aufgabe besteht in der Bereitstellung eines Energie sparenden und Ressourcen effizient nutzenden Verfahrens zur Wiedergewinnung von Phosphor in Form von Phosphat aus Biomasse, Braunkohle oder sonstigen organischen Substraten, zum Beispiel Klärschlamm, Tiermehl, Tierresten, Knochenmaterial, Gärrückständen. Insbesondere soll eine möglichst effiziente Fahrweise der Biomassenutzung/Klärschlammnutzung ermöglicht werden. Ein weiterer Aspekt besteht in einer möglichst effektiven Nutzung des Kohlenwasserstoffanteils des Einsatzstoffes. Vor allem fettreiche Kohlenwasserstoffe bieten eine hervorragende Ausgangsbasis für die stoffliche Nutzung.

Die Aufgabe der Erfindung wird durch ein Verfahren mit den Merkmalen von Anspruch 1 gelöst. Es handelt sich dabei um ein Verfahren zur Gewinnung von Phosphor durch Phosphatentfrachtung eines phosphorhaltigen organischen Substratmaterials mit integrierter Nutzung von Pyrolysekoks, umfassend die Verfahrensschritte:
a) eine Pyrolyse des Substratmaterials mit oder ohne Katalysator, bei dem das Substratmaterial unter Inert- oder Reaktionsgasbedingungen zu Kohlenwasserstoffen, Brenngas und Koks als Pyrolyseprodukte umgesetzt wird und der Phosphatanteil im Feststoff somit aufkonzentriert wird;
b) zumindest teilweise Abtrennung des bei der Pyrolyse anfallenden Kokses (Pyrolysekoks) mit anschließender Phosphatentfrachtung des Kokses und Phosphatgewinnung;
c) zumindest teilweise Einbindung oder Rückführung des bei der Pyrolyse anfallenden Kokses in eine Aufbereitungsstufe des Substratmaterials vor der Pyrolyse, so dass ein Kohlenstoffkreislauf in den Gesamtprozess der Phosphatentfrachtung und Phosphatgewinnung integriert ist.

Dieses Verfahren zur Phosphatentfrachtung eines phosphorhaltigen organischen Substratmaterials schließt gemäß einer Weiterbildung der vorliegenden Erfindung neben der integrierten Nutzung von Pyrolysekoks auch die integrierte Nutzung von aus Pyrolyseprodukten gewonnener Energie und/oder von Wasserdampf, der zum Beispiel bei einem Trocknen des Substratmaterials vor Pyrolyse entsteht, ein.

Vorzugsweise erfolgt in Verfahrensschritt c) die Einbindung oder Rückführung zumindest eines Teils des bei der Pyrolyse anfallenden Kokses als Hilfsstoff für die mechanische Entwässerung eines organischen Substratmaterials und/oder zur Adsorption von organischen Verbindungen und/oder toxischen Substanzen aus einer wässrigen Phase des Substratmaterials vor dessen Pyrolyse.

Die Phosphatentfrachtung des Pyrolysekokses gemäß Verfahrensschritt b) findet vorzugsweise in einem separaten Prozess durch einen Extraktionsprozess einer Pyrolysekoks-Wasser-Mischung statt, wobei die Abtrennung des Phosphats aus der wässrigen Phase sowohl separat als aber auch gemeinsam mit bereits gelöstem Phosphat des noch nicht pyrolysierten Substratmaterials, soweit es in wässriger Phase vorliegt, zum Beispiel in Klärschlamm, erfolgen kann.

Die nach der Phosphatentfrachtung anfallende Pyrolysekoks-Wasser-Mischung kann dabei teilweise oder vollständig auch direkt ohne Zwischenschritte als Entwässerungshilfe und/oder Adsorbens für die Aufbereitung des Substratmaterials gemäß Verfahrensschritt c) eingesetzt werden. Die Pyrolysekoks-Wasser-Mischung kann zum Beispiel eine Suspension sein. Die Pyrolysekoks-Wasser-Mischung kann aber auch in anderer Form vorliegen, zum Beispiel in Gestalt eines von Wasser durchströmten Koks-Festbetts.

Konzeptionsgemäß ist das Verfahren so gestaltet, dass die in Verfahrensschritt a) entstehenden Pyrolyseprodukte, das heißt Kohlenwasserstoffe, Brenngase und Koks, als Stoffe und/oder als Energieträger im Gesamtprozess der Phosphatentfrachtung wiederverwendet werden können.

Dem nach der Pyrolyse anfallenden Koks wird, zum Beispiel durch Laugung oder Extraktion, Phosphor entzogen. Dieser oder ein weiterer Teil des bei der Pyrolyse anfallenden Kokses wird abgetrennt und der Aufbereitung des Substratmaterials zugeführt. Das kann zum Beispiel die Zugabe des Kokses in das zu behandelnde Substratmaterial, zum Beispiel Abwasser oder Klärschlamm, nach oder vor einer Phosphatentfrachtung sein. Dabei wird bei Letzterem nicht nur dem Substratmaterial, im gewählten Beispiel dem Abwasser und dem Klärschlamm, sondern auch dem beigefügten Koks oder der zurückgeführten Asche das Phosphat entzogen.

Zusätzlich wird der Koks, der adsorptive Eigenschaften aufweist und als Adsorbens wirkt, als Reinigungsmittel für das zu behandelnde Substratmaterial dienen. Im Fall der Klärschlammbehandlung können so toxische Substanzen, wie zum Beispiel Schwermetalle, oder organische Substanzen, die nicht in der wässrigen Phase verbleiben sollen, insbesondere ins Abwasser gelangte Wirkstoffe aus Medikamenten, adsorbiert werden.

Der entstehende Koks wird auch als Hilfsstoff zur Unterstützung der Entwässerung des organischen Substratmaterials eingesetzt. Für die mechanische Entwässerung werden häufig Strukturmaterialien wie Kalk, Asche und Kohle verwendet. Kokse können ebenfalls die Entwässerung verbessern und darüber hinaus organische Spurenstoffe eliminieren. Erfindungsgemäß dient der Koks in der Entwässerungsstufe bei der Vorbehandlung des Substratmaterials als Entwässerungshilfe, wodurch Polymere, Fällungsmittel oder sonstige Hilfsstoffe zur Entwässerung eingespart werden können. Zusätzlich kann durch die vermehrte Wasserabtrennung Energie beim Trocknungs- und Pyrolyseprozess des Substratmaterials gespart werden.

Ein zusätzliche Wärmeintegration bzw. Stoffgewinnung findet bei der Pyrolyse statt. So können zum Beispiel die bei der Pyrolyse entstehenden Kohlenwasserstoffe stofflich oder als Brenngas zur Wärmegewinnung und/oder Stromerzeugung genutzt werden. Die durch Verbrennen des Brenngases gewonnene Wärme bzw. Elektroenergie kann vorteilhafterweise für das Trocknen oder das Aufheizen des Substratmaterials im Trocken- bzw. Pyrolyseapparat verwendet werden.

Das Verfahren umfasst die integrierte Wiedergewinnung von Phosphor aus Biomasse und Braunkohle und sonstigen organischen Substratmaterialien. Besonders geeignete Substratmaterialien sind beispielsweise Klärschlamm, Tiermehl, Tierreste, Knochenmaterialien oder Gärrückstände. Durch die Erfindung können Feststoffe mit hohem Phosphatgehalt generiert werden. Diese Feststoffe können anschließend einer Extraktion unterzogen werden, so dass Phosphat extrahiert werden kann, zum Beispiel durch Mineralsäuren, organische Säuren und/oder Kohlendioxid. Das integrierte Konzept ermöglicht darüber hinaus beispielsweise eine autarke, dem Strombedarf angepasste Fahrweise einer Klärschlammnutzung.

Gemäß einer Weiterbildung des Verfahrens umfasst dieses einen weiteren Verfahrensschritt d) mit einer Vergasung oder Verbrennung zumindest eines Teils des Kokses, wobei ein phosphathaltiger fester Rückstand in Form von Asche oder Schlacke verbleibt. Das Vergasen/Verbrennen kann mittels Oxidieren bei unterstöchiometrischer Zugabe eines Oxidationsmittels und/oder durch Reformieren unter Einsatz von Wasserdampf erfolgen. Alternativ findet in Verfahrensschritt d) eine Monoverbrennung des Kokses statt. Der phosphathaltige feste Rückstand wird anschließend einer Phosphatentfrachtung und gegebenenfalls einer Phosphatrückgewinnung zugeführt.

Die Umsetzung des Substrats in Verfahrensschritt a) erfolgt vorteilhaft bei milden Temperaturen, das heißt in einem Temperaturbereich von 350 bis 600 °C. Damit soll erreicht werden, dass die Extrahierbarkeit bzw. die Pflanzenverfügbarkeit des Phosphats möglichst erhalten bleibt.

Das Verfahren zeichnet sich somit durch folgende Eigenschaften aus:
➢ eine parallele Gewinnung von Phosphat und Kohlenwasserstoffen,
➢ eine Einengung der Substratmasse für die thermische Verbrennung,
➢ Verbrennung eines energetisch minderwertigen Rückstands, da hohe Mengen an Kohlenstoff entzogen wurden und ein hoher Ascheanteil resultiert, wobei Aschen bei niedriger Verbrennungstemperatur entstehen, wodurch keine Schlacke gebildet wird,
➢ leichte Zugänglichkeit des Phosphats für die Extraktion bzw. für Pflanzen,
➢ Ressourceneffizienz,
➢ Energieeffizienz und Reduzierung der Transportkosten.

Mit dem erfindungsgemäßen Verfahren können vor allem biogene Abfälle in sauerstoffarme oder sauerstofffreie Kohlenwasserstoffe und Phosphat umgewandelt werden. Phosphat kann dabei mit üblichen Verfahren entweder aus dem Koks oder dessen Asche gewonnen werden. So kann die Gewinnung des Phosphats aus dem durch die Pyrolyse in Verfahrensschritt a) erhaltenen Koks und/oder aus der in Verfahrensschritt d) erhaltenen Asche zum Beispiel mittels Säuren, Laugen, flüssigem oder überkritischem Kohlendioxid als Extraktionsmittel erfolgen. Gemäß einer bevorzugten Ausführungsform der Erfindung erfolgt die Extraktion im sauren Bereich. Dabei wird/werden der Koks und/oder die Asche vor der Extraktion vorteilhafterweise mit verdünnten Säuren, wie Mineralsäuren oder organischen Säuren, angefeuchtet. Auf diese Weise kann Phosphat aus feuchtem Koks extrahiert werden. Das freigesetzte Phosphat kann nach Einmischen der wässrigen und/oder extrahierten Koksphase in ein Substrat, wie z.B. Klärschlamm, zusammen mit dem dort rückgelösten Phosphat durch eine pH-Werterhöhung ausgefällt werden.

Das Phosphat, das als Rohstoff limitiert zur Verfügung steht, kann so auf relativ einfache Weise gewonnen werden. Das gewonnene Phosphat kann so insbesondere zur Substitution von bergmännisch abgebautem Phosphat verwendet werden. Die erhaltenen Kohlenwasserstoffe können zudem als Substitut für Erdöl eingesetzt werden.

Vor der Pyrolyse sollte das organische Substrat vorteilhafterweise getrocknet werden. Hierbei fallen hohe Energiekosten an. Die Möglichkeit der mechanischen Vorentwässerung spielt dabei eine wesentliche Rolle bei der Reduzierung der Energiekosten. Üblicherweise wird eine gute Entwässerung mit Zusatzstoffen wie organischen Polymeren verbessert.

Bei der Pyrolyse mit oder ohne Katalysator entsteht neben dem Koks ein kohlenwasserstoffreiches Brenngas. Entweder werden die bei der Pyrolyse entstehenden Kohlenwasserstoffe stofflich genutzt, besonders bei fettreichen Tierresten, oder aber als Brenngas energetisch zur Wärmegewinnung und/oder Stromerzeugung verwendet, wie in einem Blockheizkraftwerk zum Beispiel mit Klärschlamm. Wird Wärme frei, so kann diese für den Trocknungsprozess des Einsatzstoffes, des organischen Substratmaterials, herangezogen werden, zum Beispiel für eine Klärschlammtrocknung oder Torrefizierung. Unter Torrefizierung ist eine thermische Behandlung von Biomasse ohne Luftzutritt zu verstehen, die zu einer pyrolytischen Zersetzung und Trocknung der Biomasse führt. Die Vorbehandlung, insbesondere die Trocknung des organischen Substrats vor der Pyrolyse, kann so ohne zusätzliche Hilfsenergie auskommen. Bei Klärschlamm ist besonders ungefaulter Klärschlamm vorzuziehen, der einen höheren Energiegehalt aufweist.

Das bei einem Trocknungsprozess bzw. bei einer Torrefizierung ausgetriebene Wasser kann als Wasserdampf der Reformierung des Kokses zugeführt werden, wodurch eine zusätzliche Effizienzsteigerung möglich ist.

Gemäß einer vorteilhaften Ausführungsform der Erfindung erfolgt der Pyrolyseprozess katalytisch. Vorzugsweise werden dabei kugelförmige Katalysatoren, einschließlich Kugeln, deren Oberfläche mit einem Katalysatormaterial beschichtet ist, eingesetzt. Um den Wärmehaushalt bei Katalysatorzugabe zu stabilisieren, kann der Koks in Gegenwart des Katalysators mit Wasserdampf oder einem Oxidationsmittel reformiert/abgebrannt werden. Dadurch werden die Katalysatorkugeln aufgeheizt, so dass die gespeicherte Energie nach Katalysatorrückführung zum Ort der Pyrolyse wieder für den nächsten Pyrolyseschritt zur Verfügung steht.

Die Pyrolyse wird vorzugsweise in einem Temperaturbereich von 400 bis 800 °C, besonders bevorzugt in einem Bereich von 600 bis 800 °C durchgeführt. Besonders gute Eigenschaften hinsichtlich der spezifischen Oberfläche des Kokses für die Entwässerung werden bei Temperaturen von 400 bis 500 °C erreicht.

Der Koks kann zusätzlich als Energiespeicher dienen. Bei Stromüberschuss wird die Pyrolyse bis zum Produkt Koks gefahren. Dieser Koks kann gespeichert werden. Bei Strommangel kann der Koks mit Wasserdampf weiter reformiert werden, so dass zusätzliche elektrische Energie gewonnen werden kann. Die Pyrolyse kann dabei entweder bei Stromüberschuss so betrieben werden, dass möglichst viel Koks anfällt. Das Substratmaterial kann dabei elektrisch getrocknet werden. Bei Strommangel wird weniger Koks und mehr Brenngas produziert, so dass eine höhere Stromproduktion bei höherer Vergütung möglich ist.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- **Figur 1:**: eine schematische Darstellung des Ablaufs eines Verfahrens zur Gewinnung von Phosphor aus einem biogenen Reststoff als organisches Substratmaterial unter Anwendung einer Pyrolyse mit Katalysator;
- **Figur 2:**: eine schematische Darstellung des Ablaufs eines Verfahrens zur Gewinnung von Phosphor aus Klärschlamm als organisches Substratmaterial mit mehreren Möglichkeiten der Koks-Phosphatentfrachtung und
- **Figur 3:**: eine schematische Darstellung des Ablaufs eines Verfahrens zur Gewinnung von Phosphor aus Klärschlamm als organisches Substratmaterial mit Reformierung, Energiegewinnung durch Pyrolysegasverbrennung und mehreren Möglichkeiten der Koks-Phosphatentfrachtung.

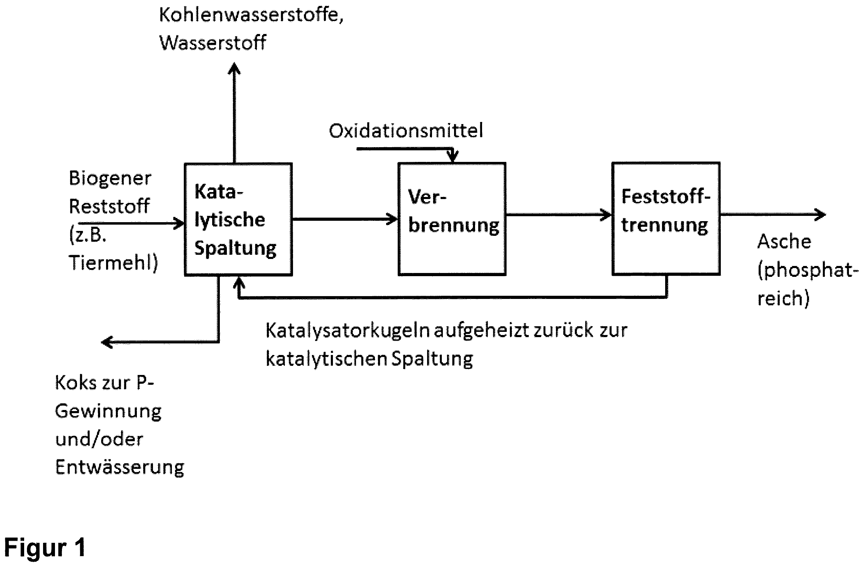

Die **Figur 1** zeigt eine schematische Darstellung des Ablaufs eines Verfahrens zur Gewinnung von Phosphor aus einem biogenen Reststoff als organisches Substratmaterial unter Anwendung einer Pyrolyse mit Katalysator. Ein biogener Reststoff, zum Beispiel Tiermehl oder Tierfette, welches allgemein einen relativ hohen Phosphoranteil aufweist, wird einer Pyrolyse unterzogen, wobei die Spaltung katalytisch mit Hilfe von Katalysatorkugeln erfolgt und als Produkte Kohlenwasserstoffe, wie zum Beispiel Propene und Butene, Wasserstoff und Koks anfallen. Ein Verfahren zur katalytischen Umsetzung von kolenwasserstoffhaltigen Feststoffen mit Hilfe von Katalysatorkugeln, welche gleichzeitig als Mahlkörper fungieren, wobei Zerkleinerung, Trocknung und katalytische Umsetzung simultan ablaufen, ist in der DE 10 2009 049 767 A1 ausführlich beschrieben.

Der Pyrolyseprozess läuft unter den folgenden Bedingungen ab:
➢ Betrieb unter Inert- bzw. Reaktionsgasbedingungen, das heißt ohne Sauerstoff, aber unter Stickstoff, Methanol und/oder Wasserstoff,
➢ Förderung von Feststoffen im Reaktor, so dass ein kontinuierlicher Betrieb möglich ist,
➢es erfolgt durch den simultanen Mahlprozess mit den Katalysatorkugeln eine Zerkleinerung des Feststoffs sowie eine stetige Erneuerung der Kontaktfläche Kohle/Katalysator.

Nach der Pyrolyse erfolgt gemäß dem in **Figur 1** gezeigten Ablaufschema eine Verbrennung eines Teils des bei der Pyrolyse anfallenden Kokses. Die Verbrennung erfolgt durch Oxidieren bei unterstöchiometrischer Zugabe eines Oxidationsmittels, vorzugsweise Luftsauerstoff, bei milden Temperaturen in einem Temperaturbereich von 600 bis 750 °C. Damit soll erreicht werden, dass die Pflanzenverfügbarkeit des Phosphats möglichst erhalten bleibt. Der Koks wird in Gegenwart des Katalysators abgebrannt. In einem weiteren Schritt erfolgt die Abtrennung der nach der Verbrennung zurückbleibenden Feststoffe, in diesem Falle phosphatreiche Asche, vom Katalysator. Dadurch werden die Katalysatorkugeln aufgeheizt. Anschließend können so die heißen Katalysatorkugeln zum Ort der Pyrolyse zurückgeführt werden.

Dieser oder ein weiterer Teil des bei der Pyrolyse anfallenden Kokses wird für die Phosphatgewinnung genutzt. Im gezeigten Beispiel wird Phosphat somit sowohl aus der Asche als auch aus dem Pyrolyse-Koks gewonnen. Die Gewinnung des Phosphats aus dem Koks und/oder aus der Asche kann mittels Säuren, Laugen, flüssigem oder überkritischem Kohlendioxid als Extraktionsmittel erfolgen.

Kokse können ebenfalls die Entwässerung verbessern und darüber hinaus organische Spurenstoffe eliminieren. Der Koks kann somit auch als Entwässerungshilfe eingesetzt werden, zum Beispiel bei der Vorbehandlung des biogenen Reststoffes. Dadurch können Polymere, Fällungsmittel oder sonstige Hilfsstoffe zur Entwässerung eingespart werden. Zudem kann durch die vermehrte Wasserabtrennung Energie bei einer Trocknung des biogenen Materials gespart werden.

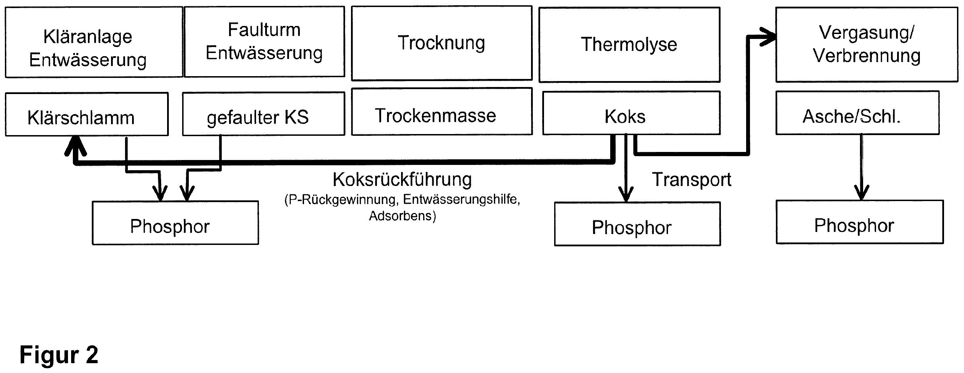

Die **Figur 2** zeigt eine schematische Darstellung eines Ausführungsbeispiels des Verfahrens, nämlich ein Verfahren zur Gewinnung von Phosphor aus Klärschlamm (KS) einer Kläranlage. Vor der Thermolyse (Pyrolyse) muss das organische Substrat, in diesem Falle der Klärschlamm, getrocknet werden. Der Klärschlamm, der den Kläranlagenablauf verlässt, der Rohschlamm, wird dazu zunächst entwässert. Wie die Figur 2 zeigt, ist eine Behandlung zumindest eines Teils des Klärschlamms im Faulturm vorgesehen. Auch der den Faulturm verlassende gefaulte Klärschlamm KS (Faulschlamm) wird anschließend entwässert. Um diesen Klärschlamm jedoch zu trocknen, das heißt den Klärschlamm nach der Entwässerung weiter zu konzentrieren und den Trockenmasseanteil zu erhöhen, werden hohe Energiemengen benötigt. Die erhaltene Trockenmasse wird dann in einem weiteren Verfahrensschritt der Thermolyse (Pyrolyse) unterzogen, bei dem das Substratmaterial unter Inert- oder Reaktionsgasbedingungen zu Kohlenwasserstoffen, Brenngas und Koks als Pyrolyseprodukte umgesetzt wird. Ein Teil des anfallenden Kokses wird dann für den Transport zu einer Vergasungs- oder (Mono)-Verbrennungsanlage ausgeschleust. Nach der Vergasung bzw. Verbrennung bleibt als fester Rückstand Asche oder Schlacke (Schl.) zurück.

Eine weitere Teilabtrennung von Koks nach der Pyrolyse dient, wie in der Figur 2 durch einen Pfeil dargestellt, der Koksrückführung zum Klärschlamm am Kläranlagenablauf bzw. am Faulturm. Der Koks kann zur Phosphor-Rückgewinnung und/oder als Entwässerungshilfe und/oder als Adsorbens verwendet werden. Der bei der Pyrolyse anfallende Koks wird dafür zum Teil abgetrennt und der Aufbereitung des Substratmaterials, in diesem Falle Abwasser oder Klärschlamm, zugeführt. Der Koks kann zum Beispiel dem Abwasser bzw. Klärschlamm vor einer Phosphatentfrachtung zugeführt werden. Dabei wird nicht nur dem Abwasser und dem Klärschlamm, sondern auch dem beigefügten Koks oder gegebenenfalls zurückgeführter Asche das Phosphat entzogen. Idealerweise wird der Koks vor der Zugabe bei niedrigen pH-Werten von kleiner pH 4 suspendiert.

Zusätzlich kann der Koks, der adsorptive Eigenschaften aufweist und als Adsorbens wirkt, als Reinigungsmittel für das zu behandelnde Substratmaterial, zum Beispiel Schlamm oder Abwasser, dienen, indem er toxische Substanzen, wie zum Beispiel Schwermetalle, oder organische Substanzen, die nicht in der wässrigen Phase verbleiben sollen, aufnimmt.

Kokse können ebenfalls die Entwässerung verbessern und darüber hinaus organische Spurenstoffe eliminieren. Für die mechanische Entwässerung werden in der Regel häufig Strukturmaterialien wie Kalk, Asche und Kohle eingesetzt. Der Koks kann in der Entwässerungstufe bei der Vorbehandlung des Klärschlamms als Entwässerungshilfe dienen, wodurch Polymere, Fällungsmittel oder sonstige Hilfsstoffe zur Entwässerung eingespart werden können. Zusätzlich kann durch die vermehrte Wasserabtrennung Energie beim Trocknungsprozess des Klärschlamms gespart werden.

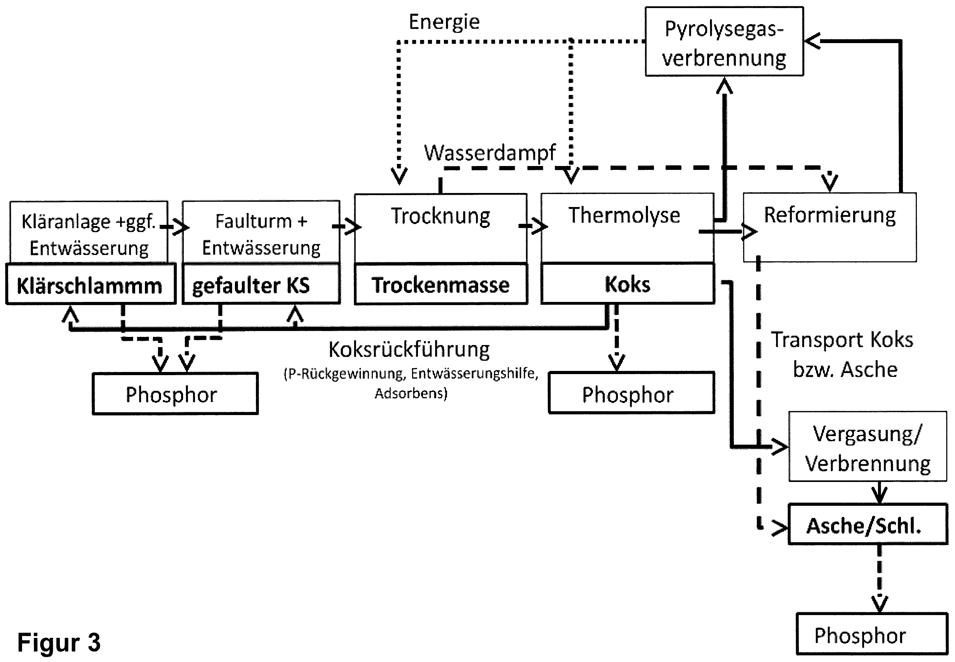

Die **Figur 3** zeigt eine schematische Darstellung eines weiteren Ausführungsbeispiels des Verfahrens zur Gewinnung von Phosphor aus Klärschlamm (KS) einer Kläranlage. Vor der Thermolyse (Pyrolyse) wird der Klärschlamm getrocknet. Dazu wird der Klärschlamm gegebenenfalls schon an der Kläranlage, spätestens aber am nachfolgenden Faulturm zunächst entwässert. Dann erfolgt die Trocknung, wobei Wasserdampf entweicht und Trockenmasse zurückbleibt. Die Trockenmasse wird anschließend der Thermolyse (Pyrolyse) unterzogen, wobei Koks und Pyrolysegas entsteht.

Ein Teil des anfallenden Kokses wird dann für den Transport zu einer Vergasungs-/Verbrennungsanlage und/oder zu einer Reformierungsanlage ausgeschleust. Bei der Reformierung wird der Einsatzstoff mit Wasserdampf zu Synthesegas (CO, H₂, CO₂) umgesetzt. Als Wasserdampf wird das beim Trocknen des Klärschlamms ausgetriebene Wasser der Reformierung zugeführt, wodurch eine zusätzliche Effizienzsteigerung möglich ist. Nach der Vergasung bzw. Verbrennung und/oder der Reformierung bleibt als fester Rückstand Asche und/oder Schlacke (Schi.) zurück. Danach erfolgt der Transport der Asche/Schlacke zu einer Phosphatrückgewinnung.

Um den Klärschlamm zu trocknen, werden hohe Energiemengen benötigt. Das durch die Pyrolyse erhaltene kohlenwasserstoffreiche Brenngas (Pyrolysegas) sowie das bei der Reformierung erhaltene Synthesegas Brenngas werden energetisch zur Wärmegewinnung und/oder Stromerzeugung verwendet. Die Wärme- und/oder Elektroenergie kann für die Trocknung des Klärschlamms genutzt werden. Die Vorbehandlung, insbesondere die Trocknung des organischen Substrats vor der Pyrolyse, kann so ohne zusätzliche Hilfsenergie auskommen. Die Energie kann aber auch für den Pyrolyseprozess selbst genutzt werden.

Wie aus der **Figur 3** ebenfalls hervorgeht, wird einem Teil des nach der Pyrolyse anfallenden Kokses, zum Beispiel durch Laugung oder Extraktion, Phosphor entzogen. Dieser oder ein weiterer Teil des bei der Pyrolyse anfallenden Kokses wird für die Aufbereitung des Abwassers bzw. Klärschlamms zur Kläranlage und zum Faulturm zugeführt, wie in der Figur 3 durch Pfeile dargestellt. Dabei kann der Koks zur Phosphor-Rückgewinnung und/oder als Entwässerungshilfe und/oder als Adsorbens verwendet werden. Der Koks kann zum Beispiel dem Abwasser bzw. Klärschlamm vor einer Phosphatentfrachtung zugeführt werden. Dabei wird nicht nur dem Abwasser und dem Klärschlamm, sondern auch dem beigefügten Koks oder gegebenenfalls zurückgeführter Asche/Schlacke Phosphat entzogen.

Der Koks kann zusätzlich als Energiespeicher dienen. Bei Stromüberschuss wird die Pyrolyse bis zum Produkt Koks gefahren. Dieser Koks kann gespeichert werden. Bei Strommangel kann der Koks mit Wasserdampf weiter reformiert werden, so dass zusätzliche elektrische Energie gewonnen werden kann. Die Pyrolyse kann dabei entweder bei Stromüberschuss so betrieben werden, dass möglichst viel Koks anfällt. Der Klärschlamm kann dabei elektrisch getrocknet werden. Bei Strommangel wird weniger Koks und mehr Brenngas produziert, so dass eine höhere Stromproduktion bei höherer Vergütung möglich ist.

Das in Figur 3 abgebildete Verfahren weist somit die folgenden Merkmale und Vorteile auf:
I Das Verfahren gestattet eine integrierte Nutzung von Pyrolysekoks, Energie und Wasserdampf bei der Phosphatentfrachtung.
II Das Verfahren sieht eine Phosphatentfrachtung des Pyrolysekokses in einem separaten Prozess, zum Beispiel durch Säuren und Fällung, oder zusammen mit einer Magnesiumammoniumphosphat (MAP)-Fällung vor. Bei Letzterem wird die Ansäuerung vorweggenommen, Phosphor löst sich, das Gemisch wird der Klärschlamm-Phosphatrückgewinnung beigemischt. Hier kommt insbesondere eine Magnesiumammoniumphosphat (MAP)-Fällung in Frage, bei dem der pH-Wert angehoben wird.
III Das Verfahren sieht darüber hinaus auch eine Nutzung des Pyrolysekokses, der dem Klärschlamm zugeführt wurde, als Entwässerungshilfe vor. Dadurch kann Fällungsmittel eingespart werden.
IV Der Pyrolysekoks kann außerdem als Adsorbens zur Entfernung von organischen Reststoffen, zum Beispiel Arzneimittelresten, in einer Reinigungsstufe des Abwassers genutzt werden.
V Ein Teil des bei der Pyrolyse anfallenden Kokses wird für den Transport zu einer zentralen Monoverbrennungsanlage ausgeschleust oder kann einer Wasserdampfreformierung oder Verbrennung zur dezentralen Energiegewinnung zugeführt werden, wobei die anfallende Asche oder Schlacke zu einer Phosphatrückgewinnung transportiert wird.
VI Der bei der Trocknung und Pyrolyse entstehende Dampf kann zur Reformierung des bei der Pyrolyse anfallenden Kokses eingesetzt werden.
VII Das Verfahren ermöglicht eine lastflexible Dampfreformierung. So kann bei hohen Strompreisen eine Reformierung durchgeführt werden, so dass zusätzliche elektrische Energie gewonnen werden kann. Bei niedrigen Strompreisen kann eine Stromaufnahme für eine elektrische Heizung, zum Beispiel bei der Trocknung des Klärschlamms, erfolgen und die Pyrolyse kann so betrieben werden, dass möglichst viel Koks anfällt.

## Patentansprüche

1. Verfahren zur Gewinnung von Phosphor durch Phosphatentfrachtung eines phosphorhaltigen organischen Substratmaterials mit integrierter Nutzung von Pyrolysekoks, umfassend die Verfahrensschritte:
a) eine Pyrolyse des Substratmaterials mit oder ohne Katalysator, bei dem das Substratmaterial unter Inert- oder Reaktionsgasbedingungen zu Kohlenwasserstoffen, Brenngas und Koks als Pyrolyseprodukte umgesetzt wird;
b) zumindest teilweise Abtrennung des bei der Pyrolyse anfallenden Kokses mit anschließender Phosphatentfrachtung des Kokses und Phosphatgewinnung;
c) zumindest teilweise Einbindung oder Rückführung des bei der Pyrolyse anfallenden Kokses in eine Aufbereitungsstufe des Substratmaterials vor dessen Pyrolyse, so dass ein Kohlenstoffkreislauf in den Gesamtprozess der Phosphatentfrachtung und Phosphatgewinnung integriert ist.

2. Verfahren nach Anspruch 1, **dadurch gekennzeichnet, dass** die Phosphatentfrachtung des Pyrolysekokses in einem separaten Prozess durch einen Extraktionsprozess einer Pyrolysekoks-Wasser-Mischung stattfindet, wobei die Abtrennung des Phosphats aus der wässrigen Phase sowohl separat als aber auch gemeinsam mit bereits gelöstem Phosphat des Substratmaterials, soweit es in wässriger Phase vorliegt, erfolgen kann.

3. Verfahren nach Anspruch 2, **dadurch gekennzeichnet, dass** die nach der Phosphatentfrachtung anfallende Pyrolysekoks-Wasser-Mischung teilweise oder vollständig direkt ohne Zwischenschritte als Entwässerungshilfe und/oder Adsorbens für die Aufbereitung des Substratmaterials eingesetzt wird.

4. Verfahren nach einem der Ansprüche 1 bis 3, **dadurch gekennzeichnet, dass** die bei der Pyrolyse entstehenden Kohlenwasserstoffe stofflich oder als Brenngas zur Wärmegewinnung und/oder Stromerzeugung genutzt werden.

5. Verfahren nach einem der Ansprüche 1 bis 4, **dadurch gekennzeichnet, dass** die durch Verbrennen des Brenngases gewonnene Wärme und/oder Elektroenergie für das Trocknen oder Torrefizierung des Substratmaterials verwendet wird.

6. Verfahren nach einem der Ansprüche 1 bis 5, **dadurch gekennzeichnet, dass** als Substratmaterial Klärschlamm, Tiermehl, Tierreste, Knochenmaterialien oder Gärrückstände eingesetzt werden.

7. Verfahren nach einem der Ansprüche 1 bis 6, weiterhin umfassend einen Verfahrensschritt d) mit einer Vergasung oder Verbrennung zumindest eines Teils des Kokses, wobei ein phosphathaltiger fester Rückstand in Form von Asche oder Schlacke verbleibt.

8. Verfahren nach Anspruch 7, **dadurch gekennzeichnet, dass** in Verfahrensschritt d) ein Vergasen/Verbrennen mittels Oxidieren bei unterstöchiometrischer Zugabe eines Oxidationsmittels und/oder durch Reformieren unter Einsatz von Wasserdampf erfolgt.

9. Verfahren nach Anspruch 8, **dadurch gekennzeichnet, dass** in Verfahrensschritt d) eine Monoverbrennung des Kokses erfolgt.

10. Verfahren nach Anspruch 8 oder 9, **dadurch gekennzeichnet, dass** die Vergasung/Verbrennung des Kokses in Verfahrensschritt d) in einem Temperaturbereich von 600 °C bis 750 °C durchgeführt wird.

11. Verfahren nach einem der Ansprüche 8 bis 10, **dadurch gekennzeichnet, dass** der phosphathaltige feste Rückstand einer Phosphatrückgewinnung zugeführt wird.

12. Verfahren nach einem der Ansprüche 1 bis 11, **dadurch gekennzeichnet, dass** die Gewinnung des Phosphats aus dem durch die Pyrolyse erhaltenen Koks und/oder aus dem in Verfahrensschritt d) erhaltenen festen Rückstand mittels Säuren, Laugen, flüssigem oder überkritischem Kohlendioxid als Extraktionsmittel erfolgt.

13. Verfahren nach einem der Ansprüche 1 bis 12, **dadurch gekennzeichnet, dass** das bei dem Trocknungsprozess oder bei der Torrefizierung ausgetriebene Wasser als Wasserdampf der Reformierung des Kokses in Verfahrensschritt d) zugeführt wird.

14. Verfahren nach einem der Ansprüche 1 bis 13, **dadurch gekennzeichnet, dass** der Pyrolyseprozess katalytisch erfolgt und dabei kugelförmige Katalysatoren, einschließlich Kugeln, deren Oberflächen mit einem Katalysatormaterial beschichtet sind, eingesetzt werden.

15. Verfahren nach einem der Ansprüche 1 bis 14, **dadurch gekennzeichnet, dass** die Pyrolyse in einem Temperaturbereich von 400 bis 800 °C durchgeführt wird.
